# EUROPEAN PATENT SPECIFICATION

(11) **EP 1 119 308 B1**
(45) Date of publication and mention of the grant of the patent: **22.08.2007**
(21) Application number: 99951850.9
(22) Date of filing: 08.10.1999
(51) Int. Cl.: A61C 7/00

(54) **DIGITALLY MODELING THE DEFORMATION OF GINGIVAL TISSUE DURING ORTHODONTIC TREATMENT**
DIGITALE MODELLIERUNG DER VERFORMUNG VON GINGIVALGEWEBE WÄHREND ZAHNMEDIZINISCHER BEHANDLUNG
MODELAGE NUMERIQUE DE LA DEFORMATION DU TISSU GINGIVAL EN COURS DE TRAITEMENT ORTHODONTIQUE

(30) Priority: 08.10.1998 US 169034; 08.10.1998 US 169276; 08.03.1999 US 264547; 14.05.1999 US 311716
(43) Date of publication of application: 01.08.2001
(73) Proprietor: Align Technology, Inc., Sunnyvale, CA 94086 (US)
(72) Inventor: CHISHTI, Muhammad, Sunnyvale, Ca (US); WEN, Huafeng, Redwood Shores, CA 94065 (US); PAVLOVSKAIA, Elena, San Francisco, CA 94109 (US); CHEANG, Ka, Man, Mountain View, CA 94043 (US)
(74) Representative: Brookes Batchellor LLP
(86) International application number: PCT/US1999/023416
(87) International publication number: WO 2000/019928

(56) References cited:
- US-A- 5 395 238
- US-A- 5 431 562
- US-A- 5 725 376

## Description

### TECHNOLOGICAL FIELD

The invention relates generally to the fields of dentistry and orthodontics.

### BACKGROUND

Two-dimensional (2D) and three-dimensional (3D) digital image technology has recently been tapped as a tool to assist in dental and orthodontic treatment. Many treatment providers use some form of digital image technology to study the dentitions of patients. U.S. patent application 09/169,276 also published with number WO0019929, describes the use of 2D and 3D image data in forming a digital model of a patient's dentition, including models of individual dentition components. That application also describes using the digital dentition models in developing an orthodontic treatment plan for the patient, as well as in creating one or more orthodontic appliances to implement the treatment plan.

Document US 543 156 discloses a method by which an orthodontic appliance is designed from digital lower jaw and tooth shape data of a patient.

### SUMMARY

The invention as specified in claims 1 and 4, provides computer-automated techniques for digitally modeling the gingival tissue of an orthodontic patient, including deformation of the gingival tissue during orthodontic treatment. These techniques are useful, for example, in creating orthodontic appliances that carry out the orthodontic treatment while fitting securely over the patient's teeth and gums. Modeling the gums and deformation of the gums helps ensure that the orthodontic appliances do not press too tightly against the patient's gums and cause discomfort or pain. Modeling how the gums react to treatment also provides a more complete understanding of what to expect during treatment. Moreover, computer-generated images and animations of the dentition during treatment are more complete and aesthetically pleasing when the gums are included.

The invention involves using a computer to develop a course of treatment for an orthodontic patient. In one aspect, the computer first obtains a digital model of a patient's dentition, including a dental model representing the patient's teeth at a set of initial positions and a gingival model representing gum tissue surrounding the teeth. The computer then derives from the digital model an expected deformation of the gum tissue as the teeth move from the initial positions to another set of positions.

In another aspect, the computer obtains a data set representing the patient's dentition, including a digital model of the patient's teeth at a set of initial positions and a first digital gingival model representing the gingival tissue surrounding the teeth at the set of initial positions. The computer then derives from the data set a second digital gingival model for use in modeling deformation of the gingival tissue as the teeth move. The computer, with or without human assistance, manipulates the second gingival model to model deformation of the patient's gums.

Other embodiments and advantages are apparent from the detailed description and the claims below.

### DESCRIPTION OF THE DRAWINGS

FIGS. 1A, 1B, and 1C show the arrangement of a patient's teeth at an initial stage, an intermediate stage, and a final stage of orthodontic treatment.
FIG. 2 shows a partial model of a patient's dentition, including a model of gingival tissue.
FIG. 3 shows a model of the gum line around a tooth crown.
FIG. 4 is a flow chart of a technique for creating a secondary gingival model.
FIG. 5 illustrates the selection of control points in a digital model of the gum line of FIG. 3.
FIG. 6 illustrates the creation of two curves representing gingival margins among control points such as those shown in FIG. 5.
FIGS. 7A, 7B, and 7C illustrate the creation of a curve representing the base of a gingival model and the selection of control points on that curve.
FIG. 8 is a partial perspective view of a secondary gingival model formed by connecting the curves of FIG. 6 and the curve of FIG. 7C.
FIG. 9 is a flow chart of a technique for creating the secondary gingival model.
FIGS. 10 and 11 are graphs showing profile curves for use in forming the secondary gingival model.
FIG. 12 is a flow chart of a technique for creating gum surfaces in the secondary gingival model.
FIG. 13 shows a graphical user interface component that allows a human operator to modify the shapes of the profile curves of FIGS. 10 and 11.
FIGS. 14, 15, and 16 are a graph and flow charts illustrating one technique for modeling the deformation of gingival tissue during the course of orthodontic treatment.
FIGS. 17 is a flow chart of an alternative technique for modeling deformation of gingival tissue.
FIGS. 18A, 18B, and 19 illustrate this alternative technique.
FIGS. 20 and 21 are flow charts describing specific embodiments of this alternative technique.

### DETAILED DESCRIPTION

U.S. patent applications 09/169,276, 09/264,547, and 09/311,941 respectively published with numbers WO 0019929, WO 0019930, WO 0019935 describe techniques for generating 3D digital data sets containing models of individual components of a patient's dentition. These data sets include digital models of individual teeth and the gingival tissue surrounding the teeth. These applications also describe computer-implemented techniques for using the digital models in designing and simulating an orthodontic treatment plan for the patient. For example, one such technique involves receiving an initial data set that represents the patient's teeth before treatment, specifying a desired arrangement of the patient's teeth after treatment, and calculating transformations that will move the teeth from the initial to the final positions over desired treatment paths. U.S. application 09/169,276 also describes the creation of data sets representing the tooth positions at various treatment stages and the use of these data sets to produce orthodontic appliances that implement the treatment plan. One technique for producing an orthodontic appliance involves creating a positive mold of the patient's dentition at one of the treatment stages and using a conventional pressure molding technique to form the appliance around the positive mold. The design of orthodontic appliances from digital dentition models is described in U.S. application 09/169,034 published with number WO 0019931.

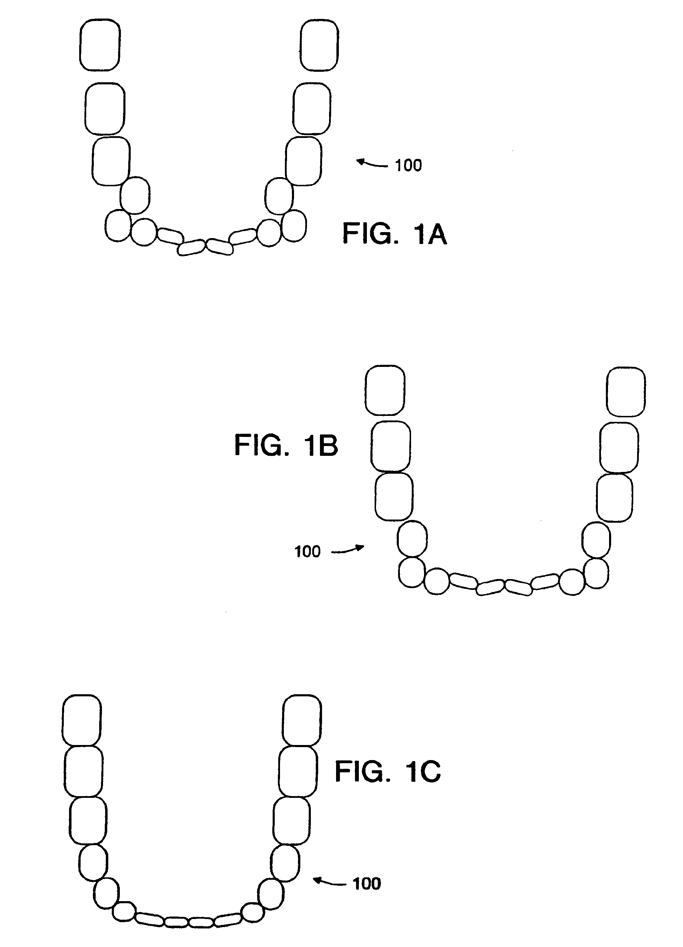

FIGS. 1A, 1B, and 1C show a patient's dentition at three stages during a course of treatment. FIG. 1A illustrates the initial positions of the patient's teeth before treatment begins. A digital model of the teeth at these initial positions is captured in an initial digital data set (IDDS). The digital model contained in the IDDS also includes portions representing gingival tissue surrounding the patient's teeth. A computer segments the IDDS into digital models of individual teeth and the gingival tissue.

FIG. 1B illustrates the patient's teeth at an intermediate stage in the treatment process, and FIG. 1C illustrates the teeth at their final positions. In many cases, a human operator manipulates the digital models of the patient's teeth to prescribe the final tooth positions. The computer then calculates one or more of the intermediate positions, taking into account any constraints imposed on the movement of the teeth by the human operator or by the natural characteristics of the teeth themselves. The computer also accounts for any collisions that might occur between teeth as the teeth move from one treatment stage to the next. Selecting the final and intermediate tooth positions and the treatment paths along which the teeth move is described in more detail in one or more of the applications cited above.

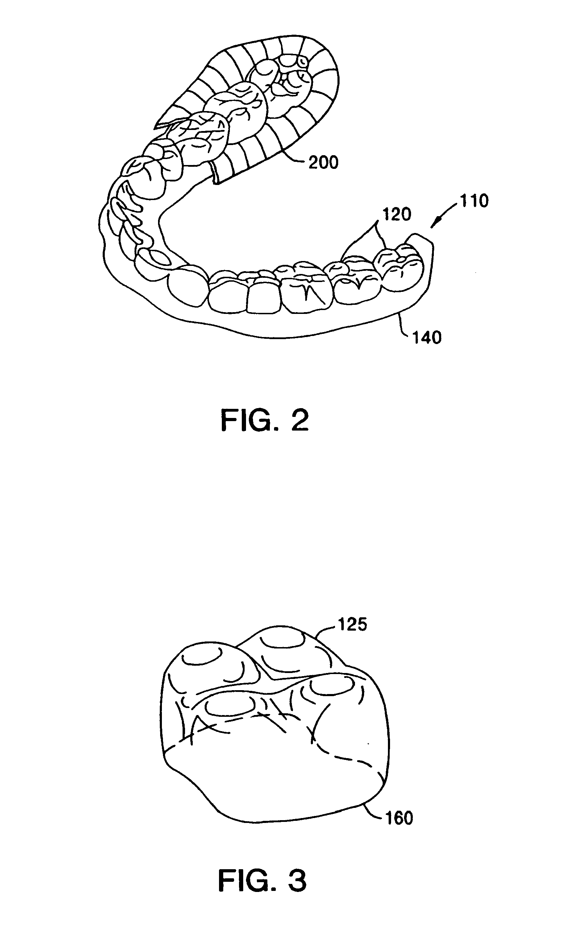

FIG. 2 illustrates a portion of a typical digital dentition model 110 derived from the IDDS. The dentition model 110 includes models of individual teeth 120 and a model of the patient's gums 140. Various techniques for creating models of gum tissue and individual teeth from the IDDS are described in U.S. applications 09/264,547 and 09/311,941.

FIG. 2 also shows a portion of a another gingival model 200 (a "secondary" gingival model), which is constructed to overlie the gingival model 140 derived from the IDDS (the "primary" gingival model). The computer uses the secondary gingival model 200, as described below, to model the deformation of the gingival tissue around the patient's teeth as the teeth move from the initial to the final positions. This ensures that orthodontic appliances made from positive molds of the patient's dentition fit comfortably around the patient's gums at all treatment stages. The secondary gingival model 200 also adds thickness to the gum model, which ensures that the orthodontic appliances do not press too tightly against the patient's gums.

FIG. 3 shows a tooth crown 125 and a corresponding gingival margin 160 around the tooth crown 125. The primary gum model 140 derived from the IDDS includes information identifying the gingival margin 160 surrounding each tooth crown 125 in the dentition model 110. The computer uses this information, as described below, to create the secondary gingival model 200 automatically.

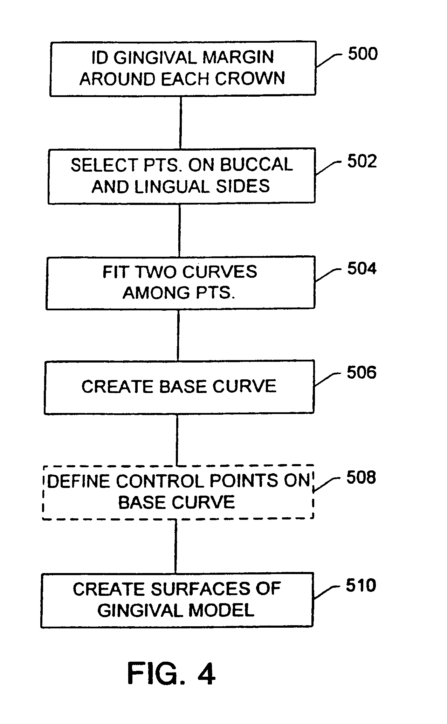

FIGS. 4-16 illustrate one technique for creating the secondary gingival model 200. In short, a computer, under control of a program implementing one or more techniques of the invention, creates curves representing the patient's gum lines and the base of the secondary model and then creates surfaces joining these curves. These surfaces become the gum surfaces in the secondary gingival model 200.

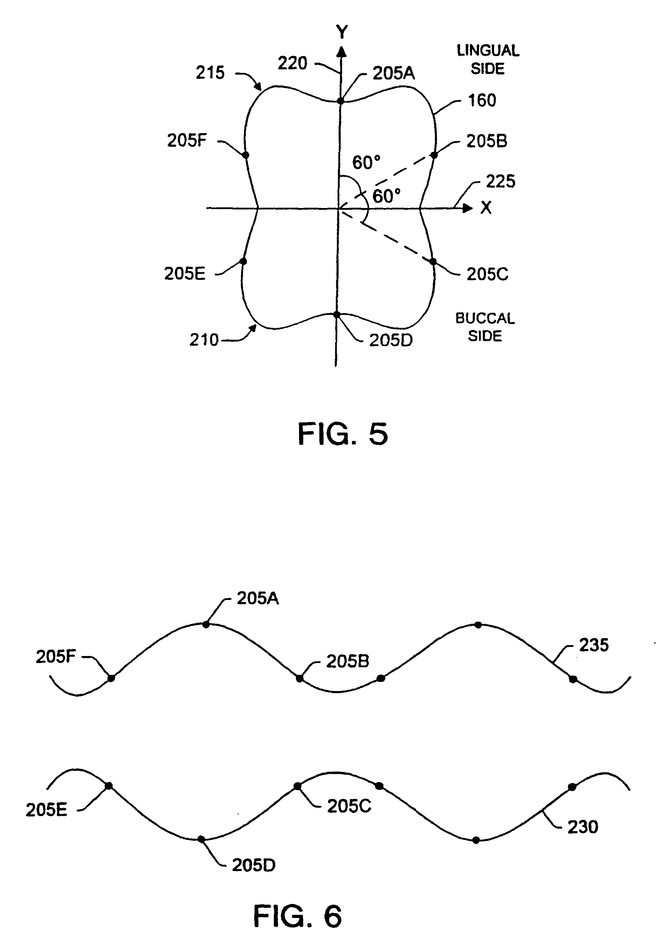

Referring to FIGS. 4 and 5, the computer first identifies each gingival margin 160 in the dentition model (step 500) and selects points 205A-F lying on the gingival margin 160 (step 502). The computer selects at least one point lying on the buccal surface 210 of the gingival margin 160 and at least one point lying on the lingual surface 215. In the example shown here, the computer selects six points 205A-F, three on each of the buccal and lingual surfaces. One technique for selecting these six points involves projecting the gingival margin 160 onto an x-y plane, selecting the point 205A at which the gingival margin 160 intersects one axis 220 of the plane, and then selecting the remaining points 205B-F at intervals of 60° around the gingival margin 160. In some embodiments, the computer varies the interval between the selected points or allows a human operator to select the positions of the points. In many cases the computer selects more than three points, often many more than three. The selected points can serve as control points that allow the human operator to manipulate the shape of the secondary gingival model 200, as described below.

Referring also to FIG. 6, once the computer has selected the points on each gingival margin 160, the computer uses the selected points to create two curves 230, 235 representing the gum lines on the buccal and lingual sides of the dentition model (step 504). These curves 230, 235 extend along the buccal and lingual surfaces of the teeth in the dentition model, beginning at the rear molar on one side of the patient's mouth and ending at the rear molar on the other side of the patient's mouth. The computer forms the curves by fitting one spline curve among the selected points on the buccal sides of the gingival margins and by fitting another spline curve among the selected points on the lingual sides of the gingival margins. The spline curves may or may not pass though all of the selected points from one model to the next.

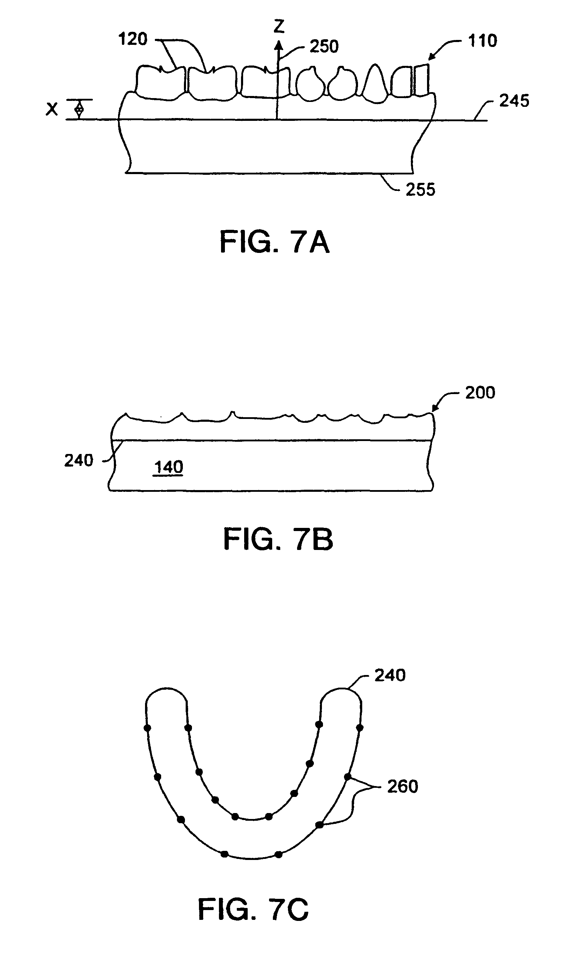

Referring also to FIGS. 7A, 7B, and 7C, the computer then creates a curve 240 that defines the base of the secondary gingival model 200 (step 506). One technique for creating the base curve 240 involves creating a plane 245 that intersects the primary gingival model 140 at some predetermined distance x below the teeth 120. This plane 245 is usually normal to the z-axis 250 of the dentition model 110 and roughly parallel to the bottom surface 255 of the dentition model 110. The base curve 240 occurs where the plane 245 intersects the surface of the dentition model 110. The distance x between the plane 245 and the teeth 120 varies from model to model, but a distance on the order of one millimeter is common. FIG. 7B shows that, in some embodiments, the secondary gingival model 200 often is large enough to cover only a portion of the primary gingival model 140. In some of these embodiments, the secondary model 200 covers only the portion of the gums that come into contact with the orthodontic appliances.

The computer optionally defines control points 260 on the base curve 240 of the secondary gingival model 200 (step 508). These control points 260 allow a human operator to modify the shape of the secondary gingival model 200. In the example shown, the computer defines eight control points on each of the buccal and lingual sides of the base curve 240.

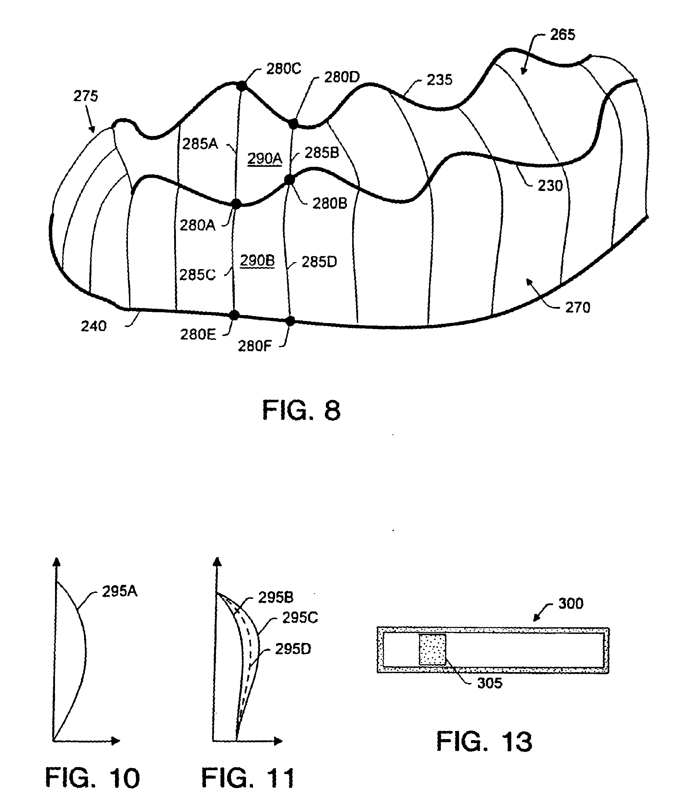

Referring also to FIG. 8, the computer completes the secondary gingival model by creating surfaces 265, 270, 275 that connect the gingival curves 230, 235 to each other and to the base curve 240 (step 510). FIG. 9 shows one technique for creating these surfaces. The computer first selects points 280A-F on each of the curves 230, 235, 240 (step 520). The computer then creates curves 285A-D between these points (step 522) and creates surface segments 290A, 290B that connect these curves (step 524). The points 280A-F selected by the computer may or may not be the control points 205A-F, 260 discussed above. Each point on one of the gingival curves 230, 235 has two corresponding points, one lying on the other gingival curve and one lying on the base curve 240. Each point on the base curve 240 has one corresponding point, which lies on the nearest one of the gingival curves 230, 235.

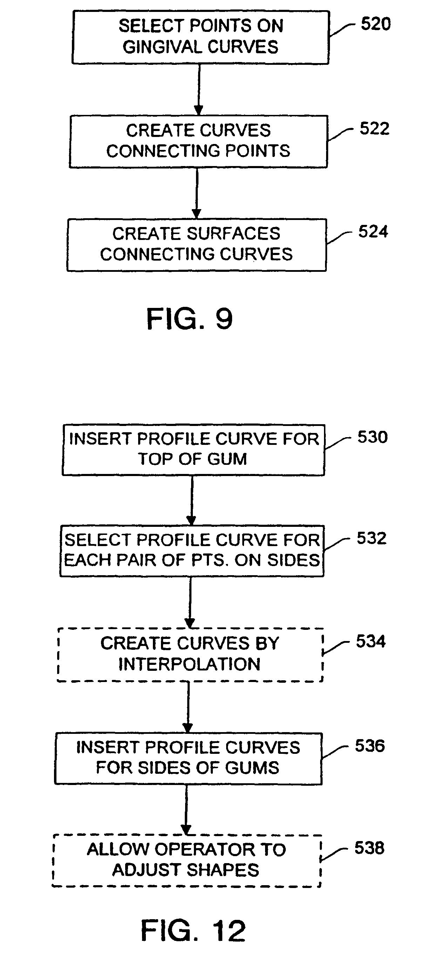

FIGS. 10 and 11 show profile curves 295A, 295B, 295C that are used in some cases to create the curves 285A-D of in FIG. 8. The profile curves represent the shapes of the gingival surfaces 265, 270, 275 between two corresponding points. As shown in FIG. 12, the computer inserts the profile curve 295A of FIG. 10 between pairs of points lying on the gingival curves 230,235 to form the top surface 265 of the secondary gingival model 200 (step 530). The computer inserts the profile curves 295B, 295C of FIG. 11 between points lying on the gingival curves 230, 235 and points lying on the base curve 240 to form the buccal and lingual surfaces 270, 275 of the secondary gingival model 200 (step 536). The computer chooses one of the curves 295B, 295C of FIG. 11 based upon the type of tooth that resides in the area in which the curve is to be inserted (step 532). For example, teeth at the front of the dentition, such as incisors, typically produce less curvature in the gum surface than teeth at the rear of the dentition, such as molars and canine teeth. Therefore, the computer selects the profile curve 295B with the flatter profile to model the gum surfaces around front teeth and selects the profile curve 295C with the more rounded profile to model the gum surfaces around rear teeth.

In some embodiments, each of the profile curves 295B, 295C of FIG. 11 is associated with one type of tooth, such as a front incisor or a rear molar. In these situations, the computer creates curves for gum surfaces adjacent to other types of teeth by interpolating between the two profile curves 295A, 295B (step 534). For example, in some cases the computer averages the two profile curves 295B, 295C of FIG. 11 to create a custom curve 295D representing the gum surfaces in the vicinity of a bicuspid. Other alternatives include storing a unique profile curve for each tooth or each type of tooth in the dentition model.

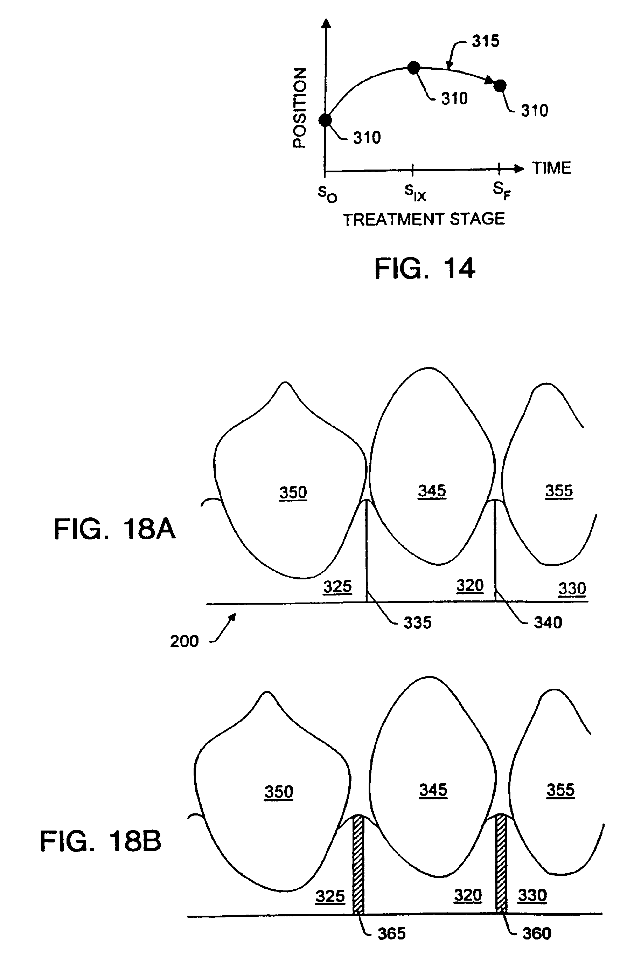

The computer also allows a human operator to adjust the shapes of the profile curves, and thus the gum surfaces, in some embodiments (step 538). FIG. 13 shows a graphical user interface component, in the form of a slide bar 300, that allows the operator to adjust the curvature of each of the profile curves 295A, 295B, 295C. Adjusting the position of the slide element 305 in the slide bar 300 changes the tangent vectors along the profile curves, which in turn changes the shapes of the curves. Other alternatives include placing control points along the curves and allowing the human operator to adjust the positions of the control points.

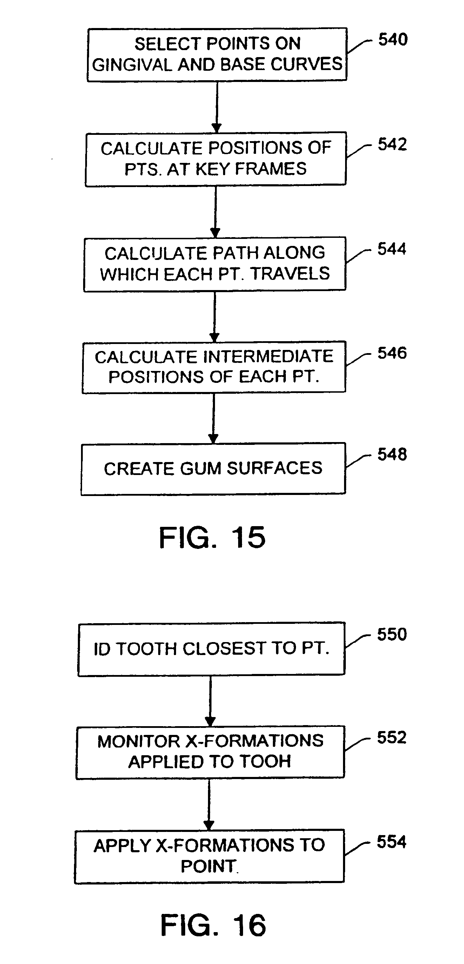

FIGS. 14 and 15 show how the secondary gingival model 200 is used to model deformation of the gum tissue during the treatment process. As described in U.S. application 09/169,276, cited above, the computer, either with or without human assistance, creates models of the patient's teeth at key treatment stages, known as key frames, between the initial and final positions. The computer also derives treatment paths along which the patient's teeth will move in going from the initial to the final positions. The treatment paths include both translational and rotational components that create the forces necessary to move the teeth to the desired positions. The treatment path for each tooth fits among the desired tooth positions at each of key frames but need not actually pass through all of the desired positions at the key frames. Models of the patient's dentition at various intermediate stages along the treatment path are used to create the orthodontic appliances that carry out the treatment plan.

In modeling gum deformation, the computer selects one or more points 310 along the gingival curves 230, 235 and the base curve 240 of the secondary gingival model (step 540) and calculates the positions of each point 310 at the initial and final stages S_{O}, S_{F} and at each of the key intermediate stages S₁ₓ, or key frames (step 542). In most cases, the points selected by the computer are the control points described above. The computer then calculates a path 315 along which the point 310 will travel. In general, the path 315 follows the curvature of the tooth that is closest to the point 310 in the dentition model. The computer determines the position of the point 310 at any given intermediate stage by the interpolating linearly along the path 315. For example, for a treatment plan in which the initial stage is Stage 1 and the first key frame occurs at Stage 10, the position of the point 310 at intermediate Stage 5 is the midpoint of the curved path 315 between Stage 1 and Stage 10. The computer generates gingival models at each of these stages by inserting profile curves and surfaces as described above.

FIG. 16 illustrates one technique for calculating the positions of the selected points on the gum lines at the key frames. This technique assumes that the selected points travel with the teeth from the initial positions to final positions. The computer first identifies the tooth closest to each point (step 550). The computer then monitors the transformations applied to each tooth in moving the tooth among the key stages to its final position (step 552). The computer applies these transformations to the corresponding points on the gum lines (step 554).

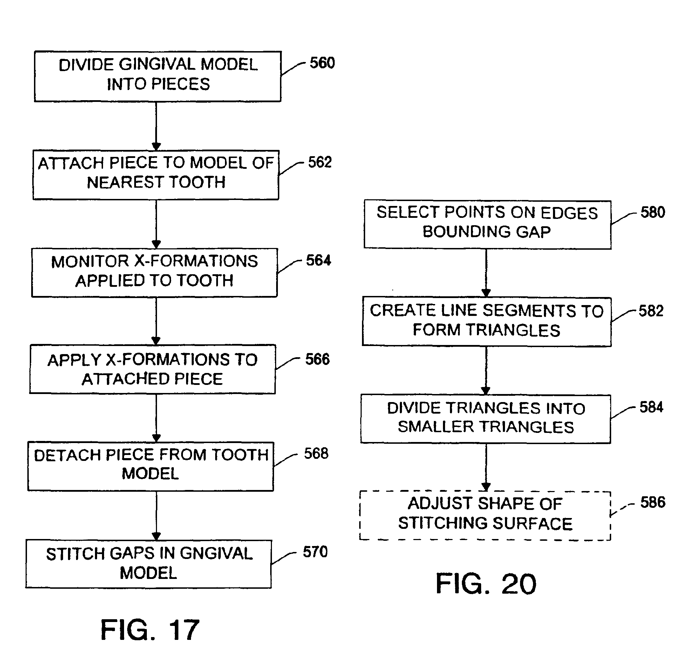

FIGS. 17, 18A, and 8B illustrate another technique for modeling the deformation of gum tissue. This technique involves dividing the secondary gingival model 200 into multiple pieces 320, 325, 330 by cutting very thin slices 335, 340 in the secondary gingival model 200 between pairs of adjacent teeth 345/350, 345/355 (step 560). Dividing the gingival model 200 in this manner allows one or more of the pieces 320, 325, 330 to move with a corresponding tooth 345, 350, 355. This technique is used most commonly to model the deformation of gum tissue around teeth that move relatively little between two treatment stages.

For each piece 320 of the secondary gum model that is to move with a tooth 345, the computer "attaches" the piece 320 to the digital model of the tooth 345 (step 562). The computer monitors the transformations applied to the tooth 345 (step 564) and applies each of these transformations to the attached piece 320 of the gingival model (step 566). As the piece 320 of the gingival model 200 moves with the tooth model, the slices 335, 340 between the pieces 320, 325, 330 of the gum model 200 grow in size, creating gaps between the pieces. When the piece 320 finally is detached from the corresponding tooth model (step 568), the computer "stitches" the secondary gingival model 200 by creating surfaces 360, 365 to fill the gaps (step 570).

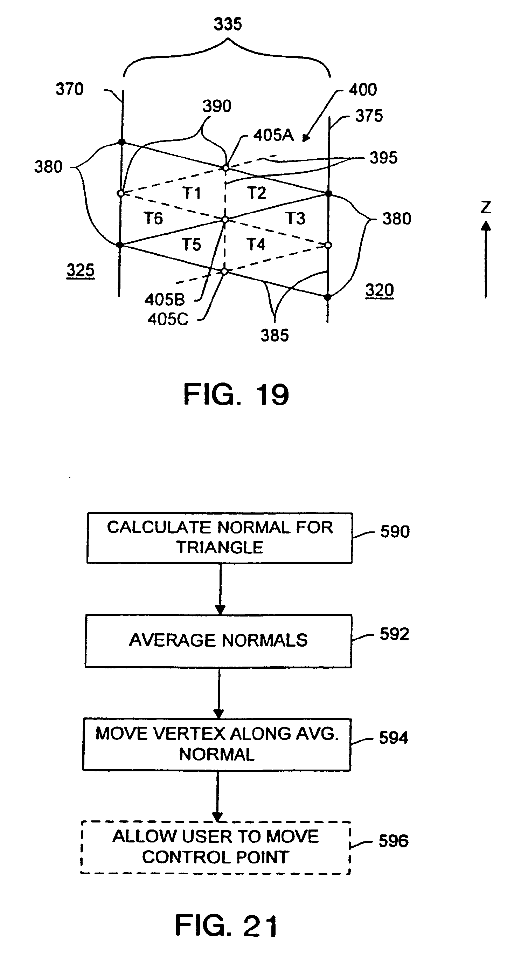

FIGS. 19 and 20 show one technique for creating a stitching surface 400 in the secondary gingival model 200. For each slice 335 to be stitched, the computer selects points 380 on the edges 370, 375 of the two pieces 320, 325 that bound the slice 335 (step 580). The computer then creates line segments 385 to form triangles bounded by the selected points 380 (step 582). Each of the triangles is bounded by two points on one of the edges 370, 375 and one point on the other edge. The computer then divides each triangle into four smaller triangles by selecting points 390 at or near the centers of the line segments 390 and creating smaller line segments 395 that extend between pairs of the newly selected points 390 (step 384). The result is a triangular surface mesh in which each point that does not lie on one of the edges 370, 375 (each "center vertex") is shared by six of the smaller triangles. For example, the center vertex labeled 405B is shared by the six smaller triangles labeled T1, T2, T3, T4, T5, T6. Each vertex that lies on one of the edges 370, 375 is shared by three of the smaller triangles.

In some embodiments, the computer adjusts the shape of the stitching surface 400 by moving the center vertices 405A, 405B, 405C in a direction that is roughly normal to the stitching surface 400 (step 586). FIG. 21 illustrates one technique for adjusting the curvature of the stitching surface 400. The computer first calculates the normals for the six triangles that share each center vertex 405A, 405B, 405C (step 590). The computer then averages these normals to find an "average normal" at the center vertex (step 592). The computer then moves the center vertex along the average normal by a selected amount (step 594). In some cases, the computer receives instructions from a human operator to adjust the shape of the stitching surface in a certain manner (step 596). For example, one embodiment displays the center vertices as control points, which the user manipulates with an input device such as a mouse.

Some implementations of the invention are realized in digital electronic circuitry, such as an application specific integrated circuit (ASIC); others are realized in computer hardware, firmware, and software, or in combinations of digital circuitry and computer components. The invention is usually embodied, at least in part, as a computer program tangibly stored in a machine-readable storage device for execution by a computer processor. In these situations, methods embodying the invention are performed when the processor executes instructions organized into program modules, operating on input data and generating output. Suitable processors include general and special purpose microprocessors, which generally receive instructions and data from read-only memory and/or random access memory devices. Storage devices that are suitable for tangibly embodying computer program instructions include all forms of non-volatile memory, including semiconductor memory devices, such as EPROM, EEPROM, and flash memory devices; magnetic disks such as internal hard disks and removable disks; magneto-optical disks; and CD-ROM.

The invention has been described in terms of particular embodiments. Other embodiments are within the scope of the following claims.

## Claims

1. A computer-implemented method for use in developing a course of treatment for an orthodontic patient, the method comprising:
obtaining a digital model of a patient's dentition, including a dental model representing the patient's teeth at a set of initial positions and a gingival model representing gum tissue surrounding the teeth; and
deriving from the digital model an expected deformation of the gum tissue as the teeth move from the initial positions to another set of positions.

2. The method of claim 1, wherein deriving the expected deformation of the gum tissue includes:
separating from the gingival model a portion that represents gum tissue surrounding a particular tooth; and
subjecting the separated portion to at least one force that is applied to the particular tooth.

3. The method of claim 1, wherein deriving an expected deformation of the gum tissue includes:
selecting a point in the gingival model; and
deriving motion of the point as the teeth move from the initial set of positions to the other set of positions.

4. A computer program, stored on a tangible storage medium, for use in developing a course of treatment for an orthodontic patient, the program comprising executable instructions that, when executed by a computer, cause the computer to:
obtain a digital model of a patient's dentition, including a dental model representing the patient's teeth at a set of initial positions and a gingival model representing gum tissue surrounding the teeth; and
derive from the digital model an expected deformation of the gum tissue as the teeth move from the initial positions to another set of positions.

5. The program of claim 4, wherein the computer derives the expected deformation of the gum tissue by:
separating from the gingival model a portion that represents gum tissue surrounding a particular tooth; and
subjecting the separated portion to at least one force that is applied to the particular tooth.

6. The program of claim 5, wherein the computer reconnects the separated portion to an adjacent portion of the gingival model after subjecting the separated portion to the transformation.

7. The program of claim 6, wherein, in subjecting the separated portion to at least one force, the computer creates a gap between the separated portion and the adjacent portion of the gingival model, and, in reconnecting the separated portion to the adjacent portion, the computer creates a stitching surface to fill the gap.

8. The program of claim 4, wherein, in deriving an expected deformation of the gum tissue, the computer selects a point in the gingival model and derives motion of the point as the teeth move from the initial set of positions to the other set of positions.

9. The program of claim 8, wherein, in deriving motion of the point, the computer attaches the point to a model of a corresponding tooth in the dental model and subjects the point to transformations applied to the corresponding tooth.

10. The program of claim 8, wherein the point lies on a gingival margin, at which the gum tissue meets one of the teeth.

11. The program of claim 8, wherein the computer creates another gingival model representing the gum tissue surrounding the teeth at the other set of positions.

## Patentansprüche

1. Computerimplementiertes Verfahren zum Entwickeln eines Behandlungsablaufs für einen Orthodontie-Patienten, mit folgenden Schritten:
Erstellen eines digitalen Modells des Gebisses des Patienten, das ein Dentalmodell, welches die Zähne des Patienten an einem Set von Ausgangspositionen repräsentiert, und ein Gingival-Modell aufweist, welches das die Zähne umgebende Zahnfleischgewebe repräsentiert; und
Ableiten einer erwarteten Deformation des Zahnfleischgewebes aus dem digitalen Modell, während sich die Zähne von den Ausgangspositionen in ein weiteres Set von Positionen bewegen.

2. Verfahren nach Anspruch 1, bei dem das Ableiten der erwarteten Deformation des Zahnfleischgewebes enthält:
Separieren eines Teils aus dem Gingival-Modell, der das einen bestimmten Zahn umgebende Zahnfleischgewebe repräsentiert; und
Einwirkenlassen mindestens einer auf den bestimmten Zahn aufgebrachten Kraft auf den separierten Teil.

3. Verfahren nach Anspruch 1, bei dem das Ableiten der erwarteten Deformation des Zahnfleischgewebes enthält:
Wählen eines Punkts in dem Gingival-Modell; und
Ableiten der Bewegung des Punkts, während sich die Zähne von dem Anfangs-Set von Positionen zu dem weiteren Set von Positionen bewegen.

4. Auf einem physischen Speichermedium gespeichertes Computerprogramm zum Entwickeln eines Behandlungsablaufs für einen Orthodontie-Patienten, wobei das Programm ausführbare Instruktionen aufweist, die bei ihrer Ausführung mittels des Computers den Computer veranlassen:
ein digitales Modell des Gebisses des Patienten zu erstellen, das ein Dentalmodell, welches die Zähne des Patienten an einem Set von Ausgangspositionen repräsentiert, und ein Gingival-Modell aufweist, welches das die Zähne umgebende Zahnfleischgewebe repräsentiert; und
aus dem digitalen Modell eine erwartete Deformation des Zahnfleischgewebes abzuleiten, während sich die Zähne von den Ausgangspositionen in ein weiteres Set von Positionen bewegen.

5. Programm nach Anspruch 4, bei dem der Computer die erwartete Deformation des Zahnfleischgewebes ableitet durch:
Separieren eines Teils aus dem Gingival-Modell, der das einen bestimmten Zahn umgebende Zahnfleischgewebe repräsentiert; und
Einwirkenlassen mindestens einer auf den bestimmten Zahn aufgebrachten Kraft auf den separierten Teil.

6. Programm nach Anspruch 5, bei dem der Computer den separierten Teil wieder mit einem benachbarten Teil des Gingival-Modells verbindet, nachdem der separierte Teil der Transformation ausgesetzt worden ist.

7. Programm nach Anspruch 6, bei dem beim Einwirkenlassen der mindestens einen Kraft auf den separierten Teil der Computer einen Freiraum zwischen dem separierten Teil und dem benachbarten Teil des Gingival-Modells erzeugt, und beim Wiederverbinden des separierten Teils an dem benachbarten Teil der Computer eine Nahtfläche zum Füllen des Freiraums erzeugt.

8. Programm nach Anspruch 4, bei dem beim Ableiten der erwarteten Deformation des Zahnfleischgewebes der Computer einen Punkt in dem Gingival-Modell wählt und die Bewegung des Punkts ableitet, während sich die Zähne von dem Ausgangs-Set von Positionen in ein weiteres Set von Positionen bewegen.

9. Programm nach Anspruch 8, bei dem beim Ableiten der Bewegung des Punkts der Computer den Punkt einem Modell eines entsprechenden Zahns in dem Dentalmodell hinzufügt und den Punkt den Transformationen unterzieht, denen der entsprechende Zahn ausgesetzt wird.

10. Programm nach Anspruch 8, bei dem der Punkt in einem Gingival-Randbereich liegt, in dem das Zahnfleischgewebe auf einen der Zähne trifft.

11. Programm nach Anspruch 8, bei dem der Computer ein weiteres Gingival-Modell erzeugt, welches das die Zähne an dem weiteren Set von Positionen umgebende Zahnfleischgewebe repräsentiert.

## Revendications

1. Procédé mis en oeuvre par ordinateur à utiliser dans le développement du déroulement d'un traitement destiné à un patient en orthodontie, le procédé comprenant les étapes consistant à :
obtenir un modèle numérique de la dentition d'un patient, incluant un modèle dentaire représentant les dents du patient au niveau d'un ensemble de positions initiales et un modèle gingival représentant un tissu fait de gomme entourant les dents ; et
déduire du modèle numérique une déformation attendue du tissu de gomme lorsque les dents se déplacent des positions initiales à un autre ensemble de positions.

2. Procédé selon la revendication 1, dans lequel déduire la déformation attendue du tissu de gomme comprend de :
séparer du modèle gingival une partie qui représente un tissu de gomme entourant une dent particulière ; et
soumettre la partie séparée à au moins une force qui est appliquée à la dent particulière.

3. Procédé selon la revendication 1, dans lequel déduire une déformation attendue du tissu de gomme comprend de :
sélectionner un point dans le modèle gingival ; et
déduire un déplacement du point lorsque les dents passent de l'ensemble initial de positions à l'autre ensemble de positions.

4. Programme d'ordinateur, stocké sur un support de stockage physique, à utiliser dans le développement du déroulement d'un traitement destiné à un patient en orthodontie, le programme comportant des instructions pouvant être exécutées qui, lorsqu'elles sont exécutées par un ordinateur, entraînent l'ordinateur à :
obtenir un modèle numérique de la dentition d'un patient, incluant un modèle dentaire représentant les dents du patient au niveau d'un ensemble de positions initiales et un modèle gingival représentant un tissu fait de gomme entourant les dents ; et
déduire du modèle numérique une déformation attendue du tissu de gomme lorsque les dents se déplacent des positions initiales à un autre ensemble de positions.

5. Programme selon la revendication 4, dans lequel l'ordinateur déduit la déformation attendue du tissu de gomme en :
séparant du modèle gingival une partie qui représente le tissu de gomme entourant une dent particulière ; et
soumettant la partie séparée à au moins une force qui est appliquée à la dent particulière.

6. Programme selon la revendication 5, dans lequel l'ordinateur reconnecte la partie séparée à une partie adjacente du modèle gingival après avoir soumis la partie séparée à la transformation.

7. Programme selon la revendication 6, dans lequel en soumettant la partie séparée à au moins une force, l'ordinateur crée un intervalle entre la partie séparée et la partie adjacente du modèle gingival et, en reconnectant la partie séparée à la partie adjacente, l'ordinateur crée une surface de suture pour remplir l'intervalle.

8. Programme selon la revendication 4, dans lequel en déduisant une déformation attendue du tissu de gomme, l'ordinateur sélectionne un point dans le modèle gingival et déduit un déplacement du point lorsque les dents passent de l'ensemble initial de positions à l'autre ensemble de positions.

9. Programme selon la revendication 8, dans lequel, en déduisant un déplacement du point, l'ordinateur fixe le point sur un modèle d'une dent correspondante dans le modèle dentaire et soumet le point aux transformations appliquées à la dent correspondante.

10. Programme selon la revendication 8, dans lequel le point repose sur une bordure de gencive, au niveau de laquelle le tissu de gomme rencontre une des dents.

11. Programme selon la revendication 8, dans lequel l'ordinateur crée un autre modèle gingival représentant le tissu de gomme entourant les dents au niveau de l'autre ensemble de positions.
